# FASCICULE DE BREVET EUROPEEN

(11) **EP 4 101 058 B1**
(45) Date de publication et mention de la délivrance du brevet: **10.01.2024**
(21) Numéro de dépôt: 21703024.6
(22) Date de dépôt: 05.02.2021
(51) Int. Cl.: H02K 9/20, H02K 7/14

(54) **DISPOSITIF DE REFROIDISSEMENT DE ROTOR ET MACHINE TOURNANTE LE COMPORTANT**
ROTORKÜHLVORRICHTUNG UND DIESE ENTHALTENDE ROTIERENDE MASCHINE
ROTOR-COOLING DEVICE AND ROTATING MACHINE COMPRISING SAME

(30) Priorité: 05.02.2020 FR 2001131
(43) Date de publication de la demande: 14.12.2022
(73) Titulaire: Leviathan Dynamics, 93120 La Courneuve (FR)
(72) Inventeur: KANG, Karino, 93120 LA COURNEUVE (FR); CHAUVIN, Alan, 93120 LA COURNEUVE (FR)
(74) Mandataire: Cornuejols, Georges
(86) Numéro de dépôt international: PCT/EP2021/052855
(87) Numéro de publication internationale: WO 2021/156470

(56) Documents cités:
- WO-A2-2008/045413
- CN-A- 105 356 637
- JP-A- H10 336 968
- JP-A- 2001 095 205
- JP-A- 2008 082 623
- US-A1- 2010 006 262

## Description

### DOMAINE TECHNIQUE DE L'INVENTION

La présente invention vise un dispositif de refroidissement de rotor et une machine tournante le comportant. Elle s'applique, notamment, au refroidissement des rotors de compresseurs, en particulier de compresseurs de réfrigération utilisés, par exemple, dans le conditionnement d'air, dans la surgélation et dans la distribution d'eau glacée.

### ÉTAT DE LA TECHNIQUE

Pendant longtemps, les fabricants de systèmes de réfrigération (air conditionné, surgélation, groupe d'eau glacé) ont utilisé de façon intensive des réfrigérants chimiques dans les cycles à compression mécanique. L'impact de ces fluides sur le climat est non négligeable. Les accords sur le climat ont permis de bannir progressivement les fluides les plus néfastes. Une nouvelle règlementation va bientôt modifier en profondeur les règles d'usage de ces réfrigérants. Peu à peu, les utilisateurs et fabricants de systèmes de réfrigération devront se tourner vers des alternatives naturelles pour être en droit de commercialiser et d'utiliser leur produit indispensables à leur usage.

Pour les applications de réfrigération où la température froide est supérieure à 0°C, l'utilisation de l'eau comme réfrigérant est la solution la plus pertinente :
- L'eau est un fluide naturel, non polluant et non toxique,
- L'eau ne présente pas de risques d'explosion et d'inflammation,
- Les propriétés thermodynamiques de l'eau permettent d'obtenir un excellent coefficient de performance énergétique et
- L'eau n'est pas soumise à une règlementation concernant sa manipulation en circuit fermé.

La majorité des systèmes de réfrigération se basent sur le cycle frigorifique à compression mécanique de vapeur, lequel repose sur des changements de phase liquide-vapeur du fluide de travail. Les températures d'utilisation du système définissent les pressions de fonctionnement de la machine. Pour pouvoir évaporer de l'eau à basse température, il faut que le circuit soit sous vide (de l'ordre de quelques mbar en pression absolue). Mais la vapeur d'eau sous vide possède une énergie volumique très faible comparée aux réfrigérants conventionnels qui sont utilisés généralement sous pression, un facteur multiplicatif de l'ordre de 200 les séparant. Afin de disposer d'un système de compression de taille et coût raisonnable, il faut exploiter un compresseur capable d'offrir un débit volumique très élevé dans un volume compact tout en assurant le taux de compression requis pour effectuer le différentiel de température entre la partie chaude et la partie froide.

Dans le cas de l'utilisation d'un compresseur centrifuge à un ou plusieurs étages de compression et travaillant à haute vitesse, ce compresseur possède un rotor lui-même composé de plusieurs composants parmi lesquels :
- Un rotor de moteur électrique adapté à tourner à des vitesses supérieures à 50 000 tr/min,
- Un ou plusieurs étages de compression de type dynamique et
- Un ou plusieurs paliers dont la technologie est adaptée à supporter les conditions de fonctionnement de l'application, à savoir en particulier le vide, la vapeur d'eau et la vitesse de rotation du rotor.

Le rotor est soumis à un échauffement provenant de différentes sources telles que les pertes électriques et magnétiques du rotor, les frottements aérodynamiques sur les roues centrifuges ainsi que les pertes par frottement sur les paliers.

Le niveau de vide requis dans l'enceinte du compresseur limite fortement les transferts de chaleur par convection. De ce fait, il est nécessaire de trouver une solution pour limiter la température du rotor en régime permanent. En effet, au-delà d'un certain niveau de température, les éléments du rotor peuvent être dégradés ou perdre en performance énergétique. On peut par exemple citer une dégradation de la résistance maximale à la rupture des composants soumis à une forte centrifugation (roues centrifuges et rotor électrique en particulier), une dilatation des composants sur l'arbre qui rendrait inopérant l'assemblage (défrettage), une perte de performances du moteur électrique pouvant conduire à la démagnétisation du rotor (dans le cas d'un moteur synchrone à aimant permanent), une usure prématurée des paliers par évaporation du lubrifiant ou de température supérieure à la limite d'utilisation des matériaux. Tous ces phénomènes peuvent conduire à la destruction du rotor.

Les documents US 2010/006262 et JP H10 336968 décrivent des dispositifs de refroidissement de l'état de la technique.

### EXPOSÉ DE L'INVENTION

La présente invention vise à remédier à tout ou partie de ces inconvénients.

À cet effet, selon un premier aspect, la présente invention vise un dispositif de refroidissement d'un rotor d'une machine tournante, qui comporte :
- dans un assemblage rotor comportant le rotor et tournant avec le rotor, au moins une cavité ouverte présentant une ouverture unique débouchant autour de l'axe de rotation du rotor et
- en regard de l'ouverture unique de la cavité, un injecteur de liquide de refroidissement ;
l'ouverture unique de la cavité formant, à la fois, l'entrée du liquide de refroidissement injecté par l'injecteur et l'évacuation du fluide de refroidissement quittant la cavité sous forme de vapeur.

Ainsi, le liquide de refroidissement injecté dans la cavité formée autour de l'axe du rotor s'évapore au contact de la surface de cette cavité et refroidit le rotor. La vapeur résultant de l'évaporation du liquide de refroidissement quitte la cavité par l'ouverture unique de la cavité par laquelle le liquide de refroidissement a été injecté.

Dans des modes de réalisation, le dispositif comporte un organe de commande de l'injecteur configuré pour commander de l'injection de liquide par l'injecteur en fonction de la température du rotor.

Ainsi, on n'injecte du liquide dans la cavité que lorsque la température du rotor permet de vaporiser ce liquide, ce qui évite un excès de liquide injecté qui pourrait provoquer un débordement du liquide en dehors de la cavité.

Dans des modes de réalisation l'organe de commande de l'injecteur est configuré pour commander l'injection de liquide par l'injecteur pour que la température du rotor provoque l'évaporation du liquide sous forme de vapeur sèche.

On rappelle que, dans le cas d'un milieu ouvert, en contact avec l'air, la pression de vapeur saturante est la pression partielle de la vapeur à partir de laquelle on ne peut plus former de molécules sous forme de vapeur dans l'air, l'air est saturé. C'est la pression maximale de vapeur « sèche », c'est-à-dire sans phase liquide.

Dans des modes de réalisation, l'organe de commande de l'injecteur commande l'injection de liquide par l'injecteur quand la température du rotor est supérieure à une valeur limite prédéterminée.

Cette valeur limite prédéterminée est supérieure ou égale à la température d'évaporation du liquide injecté.

Dans des modes de réalisation, la température du rotor est déterminée par un modèle mettant en oeuvre au moins une valeur mesurée par au moins un capteur parmi :
- un capteur de température d'un stator de la machine tournante,
- un capteur de courant fourni par un variateur alimentant un moteur électrique mettant le rotor en rotation,
- un capteur de pression interne de la machine tournante,
- un capteur de température d'un liquide de refroidissement du stator de la machine tournante,
- un capteur de température du rotor et
- un capteur de vitesse de rotation du rotor.

Dans des modes de réalisation, le modèle met en oeuvre une quantité de liquide injectée par l'injecteur.

On tient ainsi compte du refroidissement du moteur par le liquide de refroidissement.

Dans des modes de réalisation, l'organe de commande est configuré pour que la quantité de liquide injectée par l'injecteur soit une fonction croissante de la température du rotor.

Dans des modes de réalisation, l'organe de commande est configuré pour que la quantité de liquide injecté par l'injecteur rend la somme de la quantité de chaleur absorbée par le réchauffement du liquide injectée, jusqu'à sa température de changement d'état, et de la quantité de chaleur absorbée par le changement d'état du liquide injecté, d'une part, supérieure à 90 % de la quantité de chaleur maximale que le rotor peut transmettre, à la température du rotor, au liquide à travers la surface de la cavité, d'autre part.

On optimise ainsi le refroidissement du rotor.

Dans des modes de réalisation, l'assemblage rotor comporte un arbre et un rotor électrique entouré par un stator électrique, la cavité étant formée, au moins dans l'arbre.

Grâce à ces dispositions, la chaleur dégagée par l'échauffement du rotor électrique et des paliers (frottement des roulements à billes) est évacuée par l'évaporation du liquide de refroidissement directement au niveau du rotor électrique et des paliers.

Dans des modes de réalisation, la cavité formée dans l'arbre s'étend sur toute la longueur du rotor électrique jusqu'à au moins un palier.

Grâce à ces dispositions, le refroidissement du rotor s'étend au-delà du seul rotor électrique et refroidit au moins un palier.

Dans des modes de réalisation, le stator électrique est parcouru, parallèlement à l'axe de rotation du rotor, par au moins un canal configuré pour véhiculer au moins une partie de la vapeur obtenue par évaporation du liquide de refroidissement dans la cavité de l'arbre.

Grâce à ces dispositions, le stator électrique est refroidi par le fluide de refroidissement sous forme gazeuse.

Dans des modes de réalisation, l'entrefer entre le rotor électrique et le stator électrique est configuré pour véhiculer au moins une partie de la vapeur obtenue par évaporation du liquide de refroidissement dans la cavité de l'arbre.

Grâce à ces dispositions, la partie extérieure du rotor électrique et la partie intérieure du stator électrique sont refroidis par le fluide de refroidissement sous forme gazeuse.

Dans des modes de réalisation, la cavité est configurée pour retenir le liquide injecté par l'injecteur. Ainsi, le liquide qui n'est pas vaporisé ne peut s'échapper de la cavité. On note que retenir le liquide peut être obtenu par une forme de cavité présentant, à son ouverture unique, une section plus faible que sa section maximale, la force centrifuge retenant le liquide dans la zone de section supérieure à la section de l'ouverture, ou par effet de la gravité, l'ouverture se trouvant en haut de la cavité.

Dans des modes de réalisation, l'ouverture de la cavité formée dans l'arbre est partiellement obturée par un rétreint dont la surface de la section au niveau de l'ouverture de la cavité est inférieure à la surface de la section à l'intérieur de la cavité.

Ce rétreint, par exemple conique, retient le liquide de refroidissement pendant la rotation du rotor, qui peut être très rapide, par exemple de l'ordre de 50 000 tours par minute.

Dans des modes de réalisation, le rotor présente un axe de rotation sensiblement vertical et la cavité ouverte formée dans l'arbre est orientée vers le haut.

Grâce à ces dispositions, le liquide de refroidissement est retenu par la force d'inertie et par gravité à l'intérieur de la cavité formée dans l'arbre.

Dans des modes de réalisation, le fluide de refroidissement est de l'eau.

L'eau offre des avantages important :
- Réduction de la facture énergétique
- Réduction des coûts de maintenance
- Réduction des coûts d'infrastructures.

Selon un deuxième aspect, la présente invention vise une machine tournante comportant un compresseur et un dispositif de refroidissement objet de l'invention, le fluide de refroidissement étant le même fluide que le fluide de travail comprimé par le compresseur.

Grâce à ces dispositions, un même fluide est traité par le circuit externe à la machine tournante et certains des composants de ce circuit, par exemple un échangeur de chaleur, peuvent être communs au fluide compressé et au fluide de refroidissement.

Dans des modes de réalisation, un canal est formé dans un carter de moteur pour véhiculer au moins une partie de la vapeur obtenue par évaporation du liquide de refroidissement dans la cavité de l'arbre, et un interstice est ménagé entre la volute et le dernier étage du compresseur, cet interstice étant configuré pour véhiculer cette partie de la vapeur.

Grâce à ces dispositions, le fluide de travail refoulé par le dernier étage du compresseur peut être refroidi par le fluide de refroidissement sous forme gazeuse.

D'autres avantages, buts et caractéristiques particulières de la machine tournante objet de l'invention étant similaire à ceux du dispositif de refroidissement objet de l'invention, ils ne sont pas rappelés ici.

### BRÈVE DESCRIPTION DES FIGURES

D'autres avantages, buts et caractéristiques particulières de l'invention ressortiront de la description non limitative qui suit d'au moins un mode de réalisation particulier du système d'apprentissage et de ses applications objets de la présente invention, en regard des dessins annexés, dans lesquels :
- La figure 1 représente, schématiquement, un cycle thermodynamique à compression mécanique de vapeur, dans lequel le fluide de refroidissement est prélevé sur le circuit de l'évaporateur,
- La figure 2 représente, schématiquement, un cycle thermodynamique à compression mécanique de vapeur, dans lequel le fluide de refroidissement est prélevé sur le circuit du condenseur,
- La figure 3 représente, schématiquement et selon deux sections, un compresseur centrifuge avec deux étages de compression, avec un passage des vapeurs au travers du moteur électrique,
- La figure 4 représente, schématiquement et selon deux sections, un compresseur centrifuge avec deux étages de compression, avec un passage des vapeurs par une sortie radiale du carter moteur,
- La figure 5 représente, schématiquement et en section, une partie du compresseur illustré en figure 3,
- La figure 6 représente, schématiquement et en section, une entrée d'injection avec un rétreint progressif,
- La figure 7 représente, schématiquement et en section, une entrée d'injection avec rétreint droit et
- La figure 8 représente, sous forme d'un logigramme, des étapes d'un mode de fonctionnement du système d'injection de liquide dans la cavité du rotor.

### DESCRIPTION DES MODES DE RÉALISATION

La présente description est donnée à titre non limitatif, chaque caractéristique d'un mode de réalisation pouvant être combinée à toute autre caractéristique de tout autre mode de réalisation de manière avantageuse.

On note dès à présent que les figures ne sont pas à l'échelle.

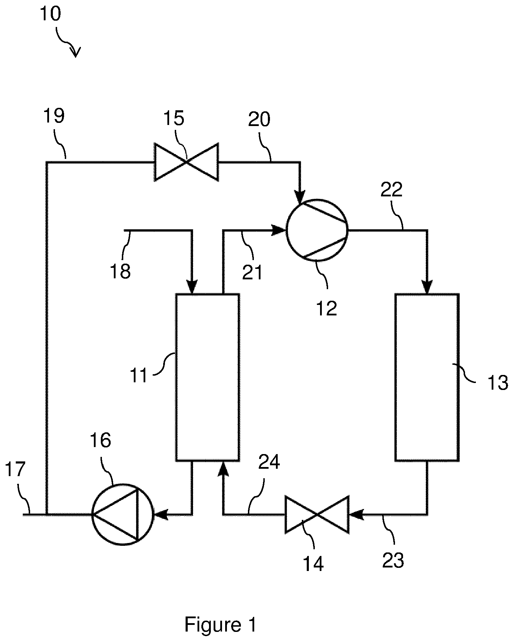

Le dispositif décrit en regard des figures 1 à 8 est un dispositif de refroidissement, par évaporation, d'un rotor de compresseur haute vitesse, plus particulièrement dans un environnement faiblement convectif. Cependant, la présente invention s'applique à toutes les machines tournantes.

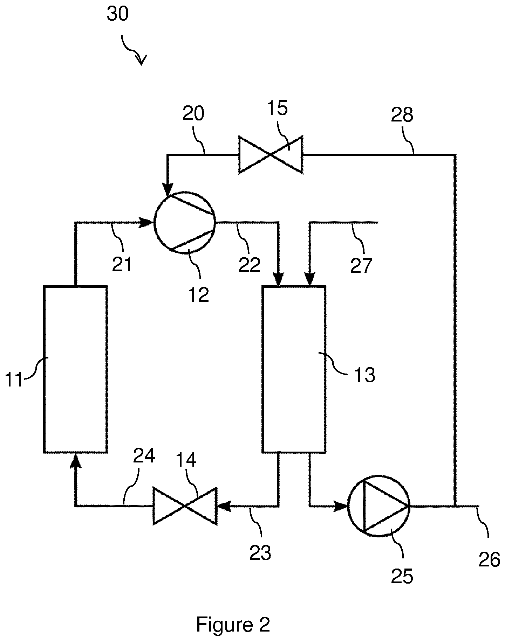

L'invention, et son application au refroidissement d'un compresseur en particulier, s'inscrit dans un cycle thermodynamique à compression mécanique de vapeur tel que présentés sur les figures 1 ou 2. Dans le cas de l'eau en tant que réfrigérant, l'eau est le fluide de travail. Celui-ci est évaporé à faible pression, cette même pression étant définie par la température d'évaporation souhaitée (par exemple, entre 0 et 20°C pour un cycle frigorifique au R718, R718 désignant le code de réfrigérant de l'eau d'après la norme 34-1992 d'ANSI/ASHRAE). Le cycle thermodynamique 10 illustré en figure 1 est dérivé d'un cycle à compression mécanique de vapeur classique mais dans le lequel le fluide frigoporteur et le réfrigérant sont une seule et même entité. À ce propos, l'homme du métier pourra se référer à la description de la demande de brevet publiée sous le numéro FR3071913.

La figure 1 montre un compresseur 12 qui récupère la vapeur d'eau qui est à basse température et provient d'un évaporateur 11 au travers d'une conduite 21. La pression de sortie du compresseur 12 est définie par la température de condensation de la vapeur d'eau par rapport à l'environnement ambiant (par exemple entre 50 et 60°C). Les vapeurs sont condensées au niveau d'un condenseur 13 après transfert par une conduite 22 depuis le compresseur 12. Cet échangeur thermique 13 peut être refroidi par l'air ambiant grâce à un ventilateur (non représenté) ou par un autre fluide, liquide ou gazeux. Après condensation de la vapeur d'eau, l'eau liquide passe au travers d'une vanne de détente 14, appelé aussi détendeur, transféré via une conduite 23 depuis le condenseur 13, puis retourne dans l'évaporateur 11 par la conduite 24. Le fluide frigoporteur à l'état liquide dans l'évaporateur 11 est transféré vers une canalisation 17 connectée au système à refroidir par la pompe de circulation 16. Le fluide frigoporteur ayant absorbé les calories provenant du système à refroidir est acheminé dans une conduite de retour 18 qui revient vers l'évaporateur 11 en phase liquide-vapeur. Dans le cas où le liquide de refroidissement du rotor est prélevé sur le circuit de l'évaporateur 11, la pompe de circulation 16 a également pour rôle de fournir la pression et le débit nécessaire au système de refroidissement du rotor du compresseur 12. Pour cela, une partie du fluide frigoporteur est dérivé grâce à la canalisation 19 à la sortie de la pompe de circulation 16. Le débit du fluide est contrôlé par la vanne de régulation 15 puis le liquide est envoyé au système d'injection du compresseur 12 par la canalisation 20.

Une seconde variante du circuit de refroidissement 30 d'un rotor dans laquelle le liquide de refroidissement est prélevé directement dans le condenseur 13 est représentée dans la figure 2. Dans ce cas, une pompe de circulation 25 est placée sur le circuit du condenseur 13. Une partie du débit de la pompe 25 est exploitée pour fournir ce qui est nécessaire au système de refroidissement du rotor du compresseur 12. De la même manière que dans la figure 1, une canalisation 28 prélève une partie du liquide pour l'envoyer au compresseur 12 via une canalisation 20, le tout étant régulé par la vanne 15. La majeure partie du débit de la pompe de circulation 25 est envoyé dans la conduite 26 afin d'être emportée vers une unité de condensation, laquelle refroidit le réfrigérant qui revient ensuite dans la conduite 27 et permettre de condenser les vapeurs chaudes présentes dans la partie haute du condenseur 13.

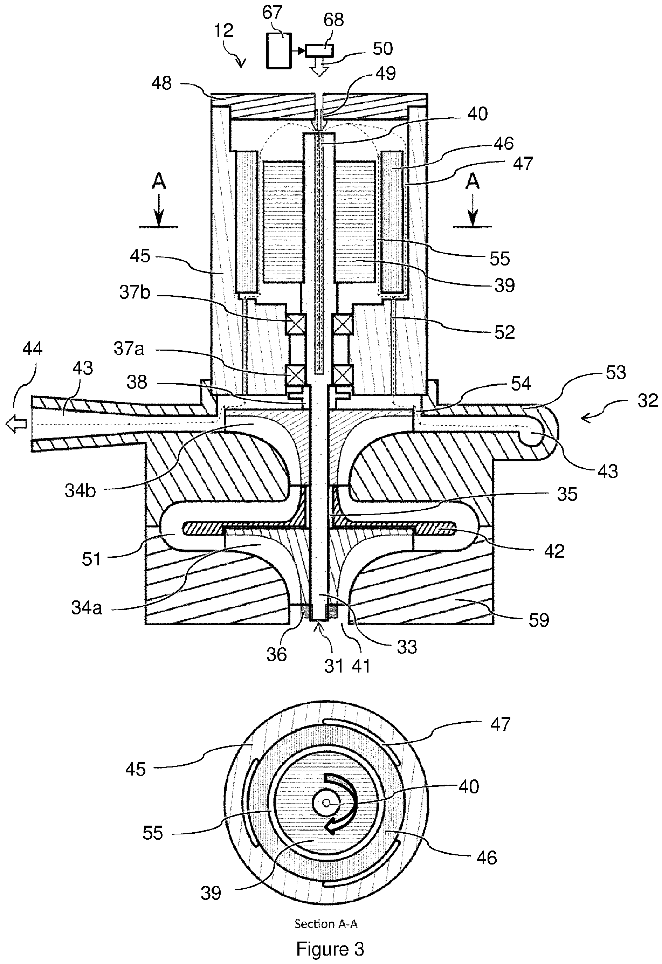

La figure 3 représente, en haut, une section axiale et, en bas, une section transversale A-A repérée dans la partie haute. Comme illustré en figure 3, le compresseur 12 est constitué d'un rotor tournant 31 et de deux parties statoriques composant l'enveloppe statorique 32. Le rotor tournant 31 comprend un arbre primaire 33 sur lequel sont montés et fixés différents composants, en particulier le rotor électrique d'entrainement 39, le ou les étages de compression 34a et 34b, et le système de paliers constitué des roulements 37a et 37b, un jeu d'entretoises 35 et 38, ainsi qu'un écrou de blocage 36.

L'assemblage rotorique 31 est réparti en trois zones, une partie moteur, une partie palier et une partie compression, placées respectivement et successivement les unes à la suite des autres. La partie compression peut comporter un ou plusieurs étages de compression, deux étages étant représentés sur la figure 3 sous la forme de roues centrifuges 34a et 34b. La technologie de compression dite centrifuge a été adoptée car elle permet d'obtenir des débits volumiques et des rapports de compression importants pour un encombrement réduit, ces caractéristiques étant particulièrement recherchées lorsqu'on utilise l'eau comme réfrigérant sous de faibles températures d'évaporation. Les roues centrifuges 34a et 34b sont réalisées dans un matériau léger et résistant à la contrainte mécanique tel que les alliages d'aluminium, voire en titane. Les étages de compression 34a et 34b sont montés les uns derrières les autres, ce qui a pour intérêt d'obtenir un compresseur compact tout en limitant les pertes de charges dans un diffuseur inter-étage 51.

En positionnant le rotor électrique 39 et les étages de compression 34a et 34b de part et d'autre de la zone palier 37a et 37b, on dispose d'un rotor 31 avec un double porte-à-faux équilibré et dont la gestion thermique de la zone palier est homogène et centralisée. L'arbre primaire 33 est réalisé dans un matériau dur et rigide tel que l'acier ou la fibre de carbone. Tous les éléments assemblés sur l'arbre primaire 33 sont montés de sorte à permettre une transmission du couple mécanique à travers chaque élément requis, tout en garantissant que ce même couple soit transmis malgré les dilatations thermiques apparaissant au cours du fonctionnement et de la montée en température du compresseur 12, jusqu'à son point de fonctionnement nominal, ainsi que la prise en compte des dilatations liées à la centrifugation des composants. Pour monter les pièces sur l'arbre primaire 33, il pourra être fait usage de différentes techniques telles que le frettage thermique à froid, le frettage thermique à chaud, la combinaison des deux méthodes de frettage thermique ou encore l'emmanchement à force.

Le couple mécanique est fourni par le rotor électrique d'entrainement 39. Ce dernier fonctionne, en combinaison avec un stator électrique 46, grâce à l'injection d'un courant électrique d'amplitude et de fréquence variable à ses bornes. Il existe plusieurs technologies de moteurs électriques parmi lesquelles, et de manière non exhaustive, les moteurs asynchrones, les moteurs synchrones à aimants permanents ou encore les moteurs synchrones à réluctance variable. Le rotor électrique d'entrainement 39 est fixé sur l'arbre primaire 33 de manière à garantir une transmission de couple à fonctionnement nominal, en prenant en compte les dilatations thermiques et les déformations liées à la centrifugation du rotor. L'arbre primaire 33 comporte une cavité ouverte 40 qui passe le long du rotor électrique 39 et s'étend préférentiellement jusqu'à la zone palier où sont situés les roulements à billes 37a et 37b. Une buse d'injection 49, ou injecteur, d'où provient le liquide de refroidissement 50 issu de la canalisation 20 est placée face à cette cavité 40.

La cavité ouverte 40 présente une ouverture unique débouchant autour de l'axe de rotation du rotor. L'ouverture unique de la cavité 40 forme ainsi, à la fois, l'entrée du liquide de refroidissement injecté par l'injecteur 49 et l'évacuation du fluide de refroidissement quittant la cavité sous forme de vapeur.

La partie centrale de l'arbre primaire 33 comporte une portée cylindrique sur laquelle sont placés au moins les deux roulements à billes 37a et 37b. Ces roulements à billes 37a et 37b sont adaptés pour tourner à de grandes vitesses de rotation, par exemple au-delà de 50 000 tr/min. Il s'agit de roulements à billes à contact obliques montés en opposition. Les bagues intérieures et extérieures sont réalisées en acier durci, résistant à la corrosion, tandis que les billes sont en acier, voire en céramique. La cage de roulement est quant à elle dans un matériau résistant à la température à laquelle le roulement fonctionne. Les roulements 37a et 37b sont montés sur l'arbre primaire 33 avec un jeu de serrage qui permet de maintenir la bague de roulement fixe malgré les efforts de centrifugation et les dilatations thermiques en fonctionnement nominal.

La configuration de montage dite « dos à dos » des roulements 37a et 37b permet d'augmenter l'entraxe équivalent de la liaison pivot formée par les deux roulements. On note qu'il faut au minimum deux roulements pour satisfaire la condition de liaison pivot. Les éléments en contact avec les roulements 37a et 37b, c'est-à-dire l'alésage de roulement du carter moteur 45 et la portée de roulement de l'arbre primaire 33 ont une dureté équivalente au matériau des bagues de roulements. Il est possible de monter une combinaison de roulements asymétriques, où le nombre de roulements placés en contact avec l'entretoise 38 est différent du nombre de roulements placés en contact avec l'épaulement de l'arbre primaire 33 près du rotor électrique d'entrainement 39.

L'étage de compression 34a est monté en centrage long sur l'arbre primaire 33 et arrêté axialement par l'épaulement de l'entretoise 38. L'entretoise 38 est montée serrée sur l'arbre primaire 33 et bloquée axialement d'un côté par un épaulement de l'arbre primaire 33. L'étage de compression 34a est maintenu en position par l'interférence de serrage de son alésage sur la portée cylindrique de l'arbre primaire 33. L'entretoise 35 est positionnée et montée serrée en centrage long sur l'arbre primaire 33. L'entretoise 35 est réalisée dans un matériau similaire à celui des étages de compression 34 ou de l'arbre primaire 33. L'entretoise 35 est arrêtée axialement sur l'arbre primaire 33 jusqu'à l'étage de compression 34b.

Ensuite, l'étage de compression 34b situé au bout de l'arbre primaire 33 est monté par un centrage long. Il possède des caractéristiques de matière et de montage similaire à l'étage de compression 34a. Les dimensions géométriques des étages de compression 34a et 34b peuvent être différentes, notamment pour la forme des aubes, le diamètre d'alésage, la largeur du moyeu, les diamètres d'entrée et de sortie des roues. L'étage de compression 34a possède également son propre jeu d'interférence garantissant un maintien de la pièce et une transmission du couple sur l'arbre primaire 33 en tenant compte des dilatations thermiques et de centrifugation. L'écrou de blocage 36 est ensuite fixé sur l'arbre primaire 33. L'écrou 36 possède un double rôle, d'une part, maintenir en place les étages de compression 34a et 34b et l'entretoise 35 dans la même position axiale et, d'autre part, de fournir un plan de correction durant la phase d'équilibrage du rotor 31. En effet, les tolérances de fabrication et de montage ne permettent pas de faire coïncider l'axe d'inertie de l'assemblage rotorique 31 avec son axe de rotation. Il se produit alors un déséquilibre résiduel qu'il convient de minimiser sous peine d'engendrer de fortes vibrations et des efforts radiaux sur les roulements à billes 37a et 37b pouvant conduire à leur dégradation prématurée. L'écrou de blocage 36 est vissé sur l'arbre primaire 33 et bloqué en rotation grâce au couple de frottement de sa face en épaulement avec l'étage de compression 34a. Cette pièce est réalisée dans un matériau similaire à celui de l'arbre primaire 33.

L'enveloppe statorique 32 comprend l'ensemble des éléments qui englobent le rotor 31 et assurent quatre fonctions majeures :
- permettre la rotation de l'assemblage rotorique 31,
- guider le fluide à comprimer entre les étages de compression 34a et 34b,
- connecter le compresseur 12 à la sortie de l'évaporateur 11 et à l'entrée du condenseur 13, et
- assurer l'étanchéité du rotor 31 vis-à-vis de l'extérieur.

L'enveloppe 32 du compresseur 12 se compose d'un carter de compresseur 59, du diffuseur inter-étage 51, d'un redresseur inter-étage 42 et d'une volute 53. Le carter compresseur 59 est connectée directement à l'évaporateur 11 via la conduite hermétique 21 (voir figures 1 et 2). Le carter 59 est réalisé dans un matériau ou comporte un revêtement résistant à la vapeur d'eau et au phénomène de corrosion. Ce carter 59 possède également une partie qui épouse la forme de chaque étage de compression. Un jeu n'excédant pas quelques dixièmes de millimètres est laissé entre la pièce statorique 53 et l'étage de compression 34a afin de permettre un débattement suffisant de l'assemblage rotor 31 lors de la mise en rotation du compresseur 12 et du passage des vitesses critiques. La rotation du premier étage de compression 34a aspire et propulse le gaz à l'aide des aubes qui les dirigent radialement vers l'extérieur par centrifugation. Le travail apporté convertit l'énergie cinétique du gaz en pression statique ce qui a pour conséquence de comprimer le gaz à la sortie de la roue centrifuge. Les vapeurs comprimées circulent ensuite dans le diffuseur 51 et passe par le redresseur inter-étage 42 pour rejoindre l'entrée de l'étage de compression suivant 34b.

Une étanchéité dynamique est réalisée avec l'entretoise 35 pour éviter un retour des gaz vers l'entrée du compresseur 12. Les vapeurs comprimées une première fois entrent ensuite dans le deuxième étage de compression 34b où ils sont à nouveau comprimés. À la sortie de l'étage de compression 34b, les vapeurs comprimées sont refoulées dans la volute 53 qui les redirige vers une sortie 44 du compresseur 12, laquelle est connectée au condenseur 13, de manière étanche par la conduite 22 (voir figures 1 et 2).

Un jeu radial ou interstice 54 existe entre la volute 53 qui se trouve fixe par rapport à l'assemblage rotor 31, et l'étage de compression 34b. Ce jeu 54 permet de garantir une absence de contact entre le rotor 31 et le stator 32 durant les phases transitoires où un débattement radial peut apparaître, en particulier au passage des vitesses critiques du rotor 31 en régime flexible. Le carter 59 et la volute 53 sont fixées ensemble de manière à garantir une étanchéité au vide entre l'intérieur du compresseur placé sous vide, et l'extérieur, à la pression atmosphérique ou équivalent. De la même façon, la volute 53 est connectée de manière étanche au carter moteur 45. Les pièces du carter 45 sont positionnées par des montages de type centrage court avec épaulement afin de garantir un défaut de co-axialité inférieur à 0,1mm sur l'ensemble des pièces de révolution.

Le carter moteur 45 intègre les roulements à billes à contact obliques 37a et 37b du palier du rotor 31 ainsi que le stator électrique 46 qui entraine le rotor d'entrainement électrique 39. Un jeu de quelques dixièmes appelé entrefer 55 existe entre le rotor électrique 39 et le stator électrique 46. Ce jeu 55 évite tout contact entre les deux circuits électriques. Le compresseur 12 comprend également un flasque moteur 48 qui assure l'étanchéité du compresseur 12 vis à vis de l'extérieur et intègre également le système d'injection du liquide de refroidissement 50 du rotor 31. L'ensemble des pièces constituant le stator, en particulier le carter compresseur 59, la volute 53, le carter moteur 45 et le flasque moteur 48 sont réalisés autant que possible dans le même matériau, celui-ci étant léger et disposant d'un revêtement résistant à la corrosion.

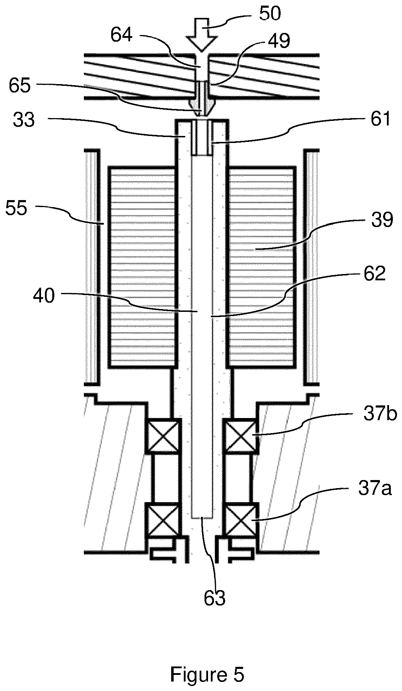

Le système de refroidissement du rotor 31 du compresseur comporte une arrivée du liquide de refroidissement 50 et une buse d'injection 49 tels que présentés sur la figure 5. Le liquide de refroidissement 50, de l'eau par exemple, est prélevée du circuit de l'évaporateur 11 ou du circuit du condenseur 13 et amené à une pression d'au moins 0,5 bar au-dessus de la pression du circuit dans lequel il a été prélevé, grâce à la pompe de circulation 16 ou 25. Avant d'atteindre le connecteur d'arrivée, le débit du liquide est régulé au travers de la vanne 15. Le contrôle du débit peut être assuré de plusieurs manières - régulation proportionnelle du débit ou régulation binaire TOR (acronyme de Tout ou Rien). Dans le dernier cas, le débit est moyenné sur la durée du cycle d'ouverture et de fermeture de la vanne 15. La valeur du débit du liquide de refroidissement à injecter dans le rotor 31 est déterminée à partir d'une loi basée sur un modèle des pertes thermiques présentes sur le rotor électrique 39 par la présence des pertes fer et pertes rotoriques et des roulements à billes à cause de la friction des billes sur les bagues de roulement. Le débit est ajusté en fonction des conditions de fonctionnement du compresseur 12. Certains paramètres physiques et électriques, tels que la puissance consommée par le moteur, la vitesse de rotation du compresseur ou la température des composants permettent de déterminer la quantité de liquide 50 à injecter pour refroidir le rotor 31.

Le dispositif de refroidissement comporte un organe de commande 67 de l'injecteur 49 qui commande l'injection de liquide par l'injecteur en fonction de la température du rotor. L'organe de commande 67 est, par exemple, un contrôleur relié à des entrées de valeurs de paramètres de fonctionnement de la machine tournante, ce contrôleur fonctionnant selon les instructions d'un programme. Ce contrôleur commande une vanne 68, par exemple une électrovanne, en amont de l'injecteur 49 sur un circuit d'alimentation (non représenté) de l'injecteur 49 en liquide sous pression.

Préférentiellement, l'organe 67 de commande de l'injecteur 49 est configuré pour commander l'injection de liquide par l'injecteur 49 pour que la température du rotor provoque l'évaporation du liquide sous forme de vapeur sèche.

Préférentiellement, l'organe 67 de commande de l'injecteur 49 commande l'injection de liquide par l'injecteur 49 quand la température du rotor est supérieure à une valeur limite prédéterminée, elle-même supérieure ou égale à la température d'évaporation du liquide injecté.

Préférentiellement, la température du rotor tournant 31 est déterminée par un modèle mettant en oeuvre au moins une valeur mesurée par au moins un capteur (non représenté) parmi :
- un capteur de température du stator 32 ou 46 de la machine tournante 12,
- un capteur de courant fourni par un variateur (non représenté) alimentant un moteur électrique (non représenté) mettant le rotor 31 en rotation,
- un capteur de pression interne de la machine tournante 12,
- un capteur de température d'un liquide de refroidissement du stator 32 ou 46 de la machine tournante 12,
- un capteur de température du rotor 31 et
- un capteur de vitesse de rotation du rotor 31.

Préférentiellement, le modèle met en oeuvre une quantité de liquide injectée par l'injecteur 49 pour tenir compte du refroidissement obtenu par l'injection du liquide.

Préférentiellement, l'organe 67 de commande est configuré pour que la quantité de liquide injectée par l'injecteur 49 soit une fonction croissante de la température du rotor 31.

Préférentiellement, l'organe 67 de commande détermine la quantité de liquide injecté par l'injecteur 49 pour que la somme de la quantité de chaleur absorbée par le réchauffement du liquide injectée, jusqu'à sa température de changement d'état, et de la quantité de chaleur absorbée par le changement d'état du liquide injecté, d'une part, soit supérieure à 90 % (et préférentiellement 95%) de la quantité de chaleur maximale que le rotor 31 peut transmettre, à la température du rotor 31, au liquide à travers la surface de la cavité 40, d'autre part.

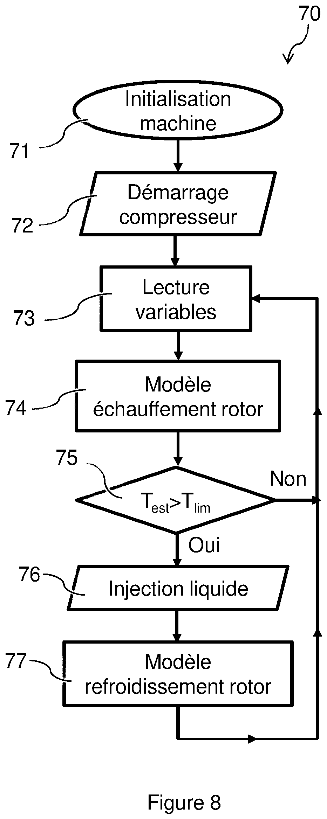

Un mode de fonctionnement préférentiel 70 de l'organe 67 de commande et de l'injecteur 49 est représenté en figure 8.

L'injection de liquide dans le rotor est définie selon une procédure 70 implémentée dans un programme d'un contrôleur de la machine 12. Le déclenchement d'injection de liquide dans la cavité 40 est basé sur un modèle de comportement thermique du rotor prédictif implémenté par un programme du contrôleur de la machine. Ce modèle est scindé en deux parties, la première partie caractérise le phénomène d'échauffement du rotor au cours du fonctionnement, la seconde partie caractérise le phénomène de refroidissement du rotor lorsqu'une injection est effectuée. Ce modèle est réalisé avec des calculs théoriques et/ou des tests de la machine et/ou par apprentissage automatique.

Le modèle de comportement thermique du rotor est alimenté par des valeurs de paramètres physiques mesurables ou prédits tels que la température du stator moteur, le courant fourni par le variateur alimentant le moteur électrique, la pression interne du compresseur, la température du liquide de refroidissement du stator, la température estimée du rotor et/ou la vitesse de rotation du rotor. Le modèle est également alimenté par les caractéristiques du rotor telles que la masse, les dimensions de la cavité de refroidissement, les caractéristiques électriques du rotor et les caractéristiques de l'injection de liquide de refroidissement.

Au cours d'une étape d'initialisation 71, on analyse l'état du compresseur, et on collecte des données relatives aux caractéristiques techniques du compresseur. Le fonctionnement entre dans une boucle itérative dès que le compresseur est démarré, au cours d'une étape 72. La détermination des valeurs de paramètres physiques est effectuée au cours d'une étape 73, par l'intermédiaire de capteurs ou d'estimateurs de température du stator, de courant fourni par le variateur, de pression interne du compresseur, de température d'un liquide de refroidissement du stator, de température du rotor et/ou de vitesse de rotation du rotor.

Cette étape 73 est réalisée au début de la boucle itérative. Les valeurs de paramètres utiles sont ensuite intégrées dans le modèle de comportement thermique du rotor liée au cours d'une étape 74 afin d'estimer la température du rotor, notée Tₑₛₜ. Un test conditionnel est réalisé au cours d'une étape 75. Ce test vise à déterminer si les conditions de température sont réunies afin d'injecter le liquide de refroidissement dans la cavité du rotor, ce liquide se vaporisant pour fournir de la vapeur sèche. Au cours du test 75, on détermine si Tₑₛₜ>Tₗᵢₘ, où Tₑₛₜ représente l'estimation de la température du rotor à partir du modèle de comportement thermique prédictif calculé à l'étape 74, Tₗᵢₘ est une valeur limite fixée de manière théorique ou empirique. Si le test est négatif, on revient à l'étape 73 où l'on récupère à nouveau les données mises à jour afin de réévaluer la température du rotor Tₑₛₜ. En revanche, si le test est positif, alors une étape 76 d'injection de liquide dans la cavité du rotor est réalisée. Préférentiellement, la quantité de liquide injectée dépend de la température du rotor et est une fonction croissante de cette température. On tient ainsi compte de la quantité de chaleur que le rotor est capable de transmettre au liquide à travers la surface de la cavité.

Cette injection donne lieu à une nouvelle estimation de la température du rotor, laquelle est calculée à partir du modèle de refroidissement rotor au cours d'une étape 77. Puis on retourne au début de la boucle itérative, à l'étape 73.

Le système d'injection est présenté sur la figure 5. Le liquide de refroidissement arrive sous pression par la canalisation 20 dans le flasque moteur 48 dans lequel un canal 64 est réalisé de manière à permettre au liquide 50 d'entrer dans la buse d'injection 49. Cette buse d'injection 49 possède un canal 65 et un orifice de petite dimension défini pour délivrer un jet droit calibré, avec un débit constant pour le niveau de pression fourni par la pompe de circulation 16 ou 25. En sortie de la buse d'injection 49, un jet droit liquide est envoyé dans la cavité 40 de l'arbre primaire 33. Cette cavité est représentée de manière cylindrique sur la figure 3. Cette cavité 40, préférentiellement cylindrique est centrée sur l'axe de rotation de l'arbre primaire 33. La paroi 62 de la cavité 40 est rectiligne, par exemple en cylindre dont la directrice est circulaire, et parallèle à l'axe de rotation de l'assemblage rotor 31. Le fond 63 de la cavité 40 est représenté plat mais peut prendre toute autre forme. La buse d'injection 49 est également centrée sur l'axe de rotation de l'assemblage rotor 31 afin que le jet liquide 50 touche le fond de la cavité 63 sur l'axe de rotation, là où la vitesse tangentielle de l'arbre primaire 33 est nulle. Le liquide de refroidissement 50 remplit progressivement la cavité 40. Le système de régulation associé à la vanne 15 suppose que la température de la paroi 62 de la cavité 40 de l'arbre primaire 33 est supérieure à la température du liquide de refroidissement traversant la buse 49. Il est également défini qu'au moment de l'ouverture de la vanne 15, la température de la paroi 62 est supérieure à la température d'évaporation du liquide du refroidissement 50 à la pression de fonctionnement du condenseur 13. Ainsi, le liquide de refroidissement 50 s'évapore au contact de la paroi 62 de la cavité 40.

Le liquide de refroidissement 50 contenu dans la cavité tournante 40 de l'arbre primaire 33 présente une surface en forme de paraboloïde dont la forme dépend de la vitesse de rotation du rotor 31 et du diamètre interne de la cavité 40. Au-delà d'une certaine vitesse de rotation, le liquide 50 peut être éjecté de la cavité 40 par effet centrifuge. Ce phénomène peut projeter des gouttes de liquide à grande vitesse en dehors du rotor 33 ce qui peut causer une usure prématurée des parois recevant l'impact de ces gouttes. De plus, l'éjection du liquide 50 limite la performance du refroidissement par évaporation puisqu'une fraction du liquide 50 injecté est évaporé, le reste étant dispersé dans le carter moteur 45.

Préférentiellement, la cavité 40 est configurée pour retenir le liquide injecté par l'injecteur 49, par l'effet de la gravité ou par l'effet de la section de l'embouchure de la cavité 40, perpendiculairement à l'axe de rotation du rotor, plus faible que la section d'au moins une autre partie de la cavité 40.

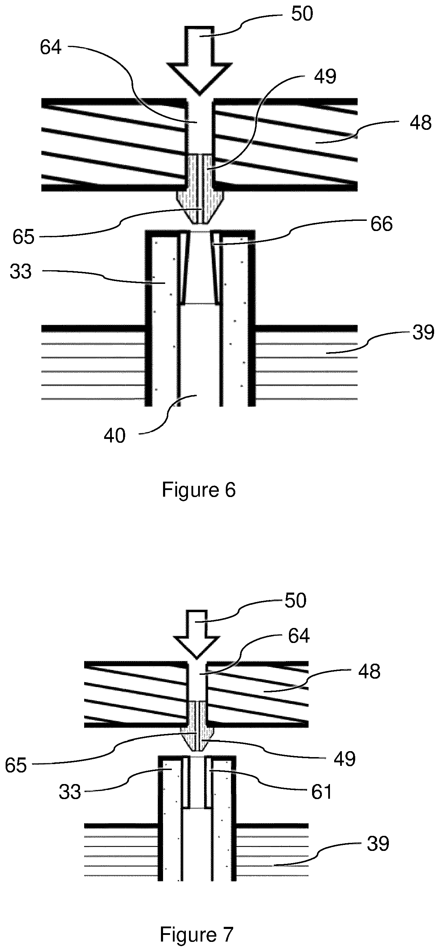

Afin de retenir le liquide de refroidissement 50 dans la cavité 40 pendant sa montée en température jusqu'au point d'évaporation, un rétreint 61 ou 66 (voir figures 6 et 7) est placé à l'entrée de l'ouverture de la cavité 40. Les dimensions du rétreint 61 ou 66 sont calculées pour autoriser le passage d'un jet liquide et d'un dégagement de vapeur au travers de la même section. Il est possible de réaliser un rétreint rectiligne 61 tel que présenté dans les figures 5 et 7, ou un rétreint progressif 66 en forme de cône tel que présenté dans la figure 6. Le rétreint progressif conique 66 permet de limiter les efforts mécaniques du liquide 50 centrifugé sur le rétreint. Plus généralement, dans des modes de réalisation, l'ouverture de la cavité formée dans l'arbre est partiellement obturée par un rétreint dont la surface de la section au niveau de l'ouverture de la cavité est inférieure à la surface de la section à l'intérieur de la cavité. Cet avantage est valable aussi bien pour un rotor 31 dont l'axe de rotation est placé à la verticale, à l'oblique ou à l'horizontale.

En fonctionnement nominal et avant l'injection d'un liquide de refroidissement 50, la pression dans le carter moteur 45 est équivalente à la plus haute pression du compresseur 12, c'est-à-dire la pression en sortie de l'étage de compression 34b qui est refoulé vers le condenseur 13. Une fois le liquide de refroidissement 50 évaporé, il se dilate dans l'enceinte formée par le carter moteur 45. Chaque volume de liquide 50 évaporé augmente la pression de vapeur dans cet espace. Les vapeurs sont alors évacuées vers des zones de plus faibles pression, en l'occurrence la pression en sortie de l'étage de compression 34a. Ainsi, la pression dans le carter moteur 45 est supérieure à celle du condenseur 13. Les vapeurs possèdent alors deux chemins de circulation pour atteindre la veine de sortie 43 du compresseur 12.

Le premier chemin passe dans l'entrefer 55, entre le stator électrique 46 et le rotor électrique d'entrainement 39. Cependant, la section de passage n'est pas suffisante face aux débits volumiques importants de gaz produit par l'évaporation du liquide de refroidissement qui permet d'extraire des calories du rotor. Un second chemin parcourant le stator électrique 46 comprenant des canaux 47 réalisés entre le carter moteur 45 et le stator électrique 46 permet également d'assurer un refroidissement du stator électrique 46 lors du passage des vapeurs au contact de la surface du stator électrique 46. Lorsque les deux chemins se rejoignent de l'autre côté du stator électrique 46, près des roulements 37a et 37b, les vapeurs passent au travers d'au moins un canal 52 dans le carter moteur 45 en périphérie de l'alésage du carter moteur 45 intégrant les roulements à billes 37a et 37b. La section totale de ces canaux 52 est équivalente à la section de passage de l'entrefer 55 et des canaux 47 de passage à travers le stator électrique 46. Les vapeurs se retrouvent au dos de l'étage de compression 34b et passent ensuite dans le conduit de la veine de sortie 43 à travers l'interstice 54, défini comme le jeu entre le diamètre de sortie de l'étage de compression 34b et le diamètre d'alésage de la volute 53. Les vapeurs du liquide de refroidissement sortent à des températures plus faibles que les vapeurs issues de l'étage de compression 34a, ce qui a pour effet de réduire la température globale du mélange gazeux dans la veine de sortie 43 et de diminuer les dimensions du condenseur. Dans la figure 3, on a représenté trois canaux 47 de passage à travers le rotor électrique 46. Bien entendu, le nombre de tels canaux peut être supérieur ou inférieur à trois.

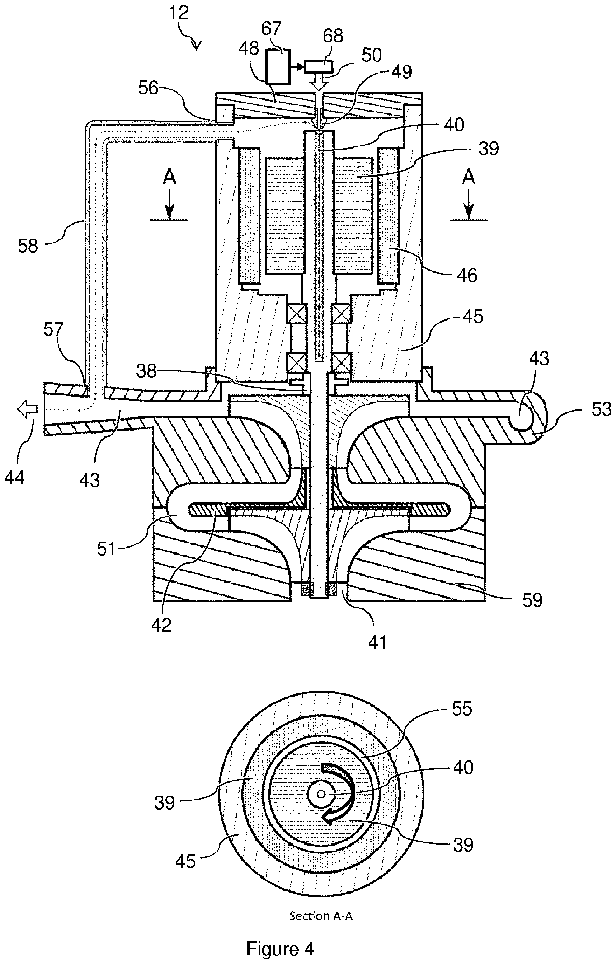

On observe, en figure 4, une configuration alternative de sortie des vapeurs de refroidissement. La figure 4 représente, en haut, une section axiale et, en bas, une section transversale A-A repérée dans la partie haute. Par rapport à la configuration illustrée en figure 3, au lieu de faire passer les vapeurs du liquide de refroidissement dans des canaux entre le stator électrique 46 et le rotor électrique d'entrainement 39, dans des canaux 47 et à travers l'interstice 54, ces vapeurs sont évacuées directement vers la veine de sortie 43 par l'intermédiaire d'un piquage de sortie 56 réalisé dans le carter moteur 45, et un piquage d'entrée 57 réalisé dans la volute 53. Une conduite 58 assure la connexion entre les deux piquages de manière hermétique.

## Revendications

1. Dispositif de refroidissement d'un rotor d'une machine tournante, ledit dispositif comporte
- dans un assemblage rotor (31) comportant le rotor et tournant avec le rotor, au moins une cavité ouverte (40) présentant une ouverture unique débouchant autour de l'axe de rotation du rotor et
- en regard de l'ouverture unique de la cavité (40), un injecteur (49) de liquide de refroidissement ; l'ouverture unique de la cavité formant, à la fois, l'entrée du liquide de refroidissement injecté par l'injecteur et l'évacuation du fluide de refroidissement quittant la cavité sous forme de vapeur.

2. Dispositif selon la revendication 1, qui comporte un organe (67, 68) de commande de l'injecteur configuré pour commander de l'injection de liquide par l'injecteur en fonction de la température du rotor.

3. Dispositif selon la revendication 2, dans lequel l'organe (67, 68) de commande de l'injecteur est configuré pour commander l'injection de liquide par l'injecteur pour que la température du rotor provoque l'évaporation du liquide sous forme de vapeur sèche.

4. Dispositif selon l'une des revendications 2 ou 3, dans lequel l'organe (67, 68) de commande de l'injecteur commande l'injection de liquide par l'injecteur quand la température du rotor est supérieure à une valeur limite prédéterminée.

5. Dispositif selon la revendication 4, dans lequel la température du rotor est déterminée par un modèle mettant en oeuvre au moins une valeur mesurée par au moins un capteur parmi :
- un capteur de température d'un stator de la machine tournante,
- un capteur de courant fourni par un variateur alimentant un moteur électrique mettant le rotor en rotation,
- un capteur de pression interne de la machine tournante,
- un capteur de température d'un liquide de refroidissement du stator de la machine tournante,
- un capteur de température du rotor et
- un capteur de vitesse de rotation du rotor.

6. Dispositif selon la revendication 5, dans lequel le modèle met en oeuvre une quantité de liquide injectée par l'injecteur.

7. Dispositif selon l'une des revendications 4 à 6, dans lequel l'organe (67, 68) de commande est configuré pour que :
- la quantité de liquide injectée par l'injecteur soit une fonction croissante de la température du rotor ou
- la quantité de liquide injecté par l'injecteur rend la somme de la quantité de chaleur absorbée par le réchauffement du liquide injectée, jusqu'à sa température de changement d'état, et de la quantité de chaleur absorbée par le changement d'état du liquide injecté, d'une part, supérieure à 90 % de la quantité de chaleur maximale que le rotor peut transmettre, à la température du rotor, au liquide à travers la surface de la cavité, d'autre part.

8. Dispositif selon l'une des revendications 1 à 7, dans lequel l'assemblage rotor (31) comporte un arbre (33) et un rotor électrique (39) entouré par un stator électrique (46), la cavité (40) étant formée, au moins, dans l'arbre (33).

9. Dispositif selon la revendication 8, dans lequel la cavité (40) formée dans l'arbre (33) s'étend sur toute la longueur du rotor électrique jusqu'à au moins un palier (37).

10. Dispositif selon l'une des revendications 8 ou 9, dans lequel le stator électrique (46) est parcouru, parallèlement à l'axe de rotation du rotor, par au moins un canal (47) configuré pour véhiculer au moins une partie de la vapeur obtenue par évaporation du liquide de refroidissement dans la cavité (40) de l'arbre (33).

11. Dispositif selon l'une des revendications 8 à 10, dans lequel l'entrefer (55) entre le rotor électrique (39) et le stator électrique (46) est configuré pour véhiculer au moins une partie de la vapeur obtenue par évaporation du liquide de refroidissement dans la cavité (40) de l'arbre (33).

12. Dispositif selon l'une des revendications 1 à 11, dans lequel l'ouverture de la cavité (40) formée dans l'arbre est partiellement obturée par un rétreint (61, 66) dont la surface de la section au niveau de l'ouverture de la cavité est inférieure à la surface de la section à l'intérieur de la cavité.

13. Dispositif selon l'une des revendications 1 à 12, dans lequel le rotor (39) présente un axe de rotation sensiblement vertical et la cavité (40) ouverte formée dans le rotor est orientée vers le haut.

14. Machine tournante comportant un compresseur et un dispositif de refroidissement selon l'une des revendications 1 à 13, le fluide de refroidissement (50) étant le même fluide que le fluide de travail comprimé par le compresseur.

15. Machine selon la revendication 14, dans laquelle un canal (52) est formé dans un carter de moteur (45) pour véhiculer au moins une partie de la vapeur obtenue par évaporation du liquide de refroidissement dans la cavité (40) de l'arbre (33), et un interstice (54) est ménagé entre la volute (53) et le dernier étage du compresseur (34b), cet interstice (54) étant configuré pour véhiculer cette partie de la vapeur.

## Patentansprüche

1. Kühlvorrichtung eines Rotors einer rotierenden Maschine, die Vorrichtung umfasst:
- in einer Rotorbaugruppe (31), die den Rotor umfasst und sich mit dem Rotor dreht, wenigstens einen offenen Hohlraum (40) mit einer einzigen Öffnung, die um die Drehachse des Rotors herum mündet, und
- gegenüber der einzigen Öffnung des Hohlraums (40) eine Einspritzdüse (49) für Kühlflüssigkeit; Wobei die einzige Öffnung des Hohlraums sowohl den Einlass für das von der Einspritzdüse eingespritzte Kühlfluid als auch den Auslass für das den Hohlraum als Dampf verlassende Kühlfluid bildet.

2. Vorrichtung nach Anspruch 1, die ein Steuerorgan (67, 68) der Einspritzdüse umfasst, das so eingerichtet ist, dass es die Einspritzung von Flüssigkeit durch die Einspritzdüse in Abhängigkeit von der Rotortemperatur steuert.

3. Vorrichtung nach Anspruch 2, in der das Steuerorgan (67, 68) der Einspritzdüse so eingerichtet ist, dass es die Einspritzung von Flüssigkeit durch die Einspritzdüse steuert, sodass die Rotortemperatur die Verdampfung der Flüssigkeit in Form von trockenem Dampf bewirkt.

4. Vorrichtung nach einem der Ansprüche 2 oder 3, in der das Steuerorgan (67, 68) der Einspritzdüse die Einspritzung von Flüssigkeit durch die Einspritzdüse steuert, wenn die Rotortemperatur über einem vorbestimmten Grenzwert liegt.

5. Vorrichtung nach Anspruch 4, wobei die Rotortemperatur durch ein Modell bestimmt wird, das mindestens einen von mindestens einem der folgenden Sensoren gemessenen Wert umsetzt:
- einem Temperatursensor eines Stators der rotierenden Maschine,
- einem Stromsensor eines Umrichters, der einen den Rotor in Drehung versetzenden Elektromotor speist,
- einem internen Drucksensor der rotierenden Maschine,
- einem Temperatursensor für eine Kühlflüssigkeit des Stators der rotierenden Maschine,
- einem Temperatursensor des Rotors und
- einem Drehzahlsensor des Rotors.

6. Vorrichtung nach Anspruch 5, wobei das Modell eine von der Einspritzdüse eingespritzte Flüssigkeitsmenge umsetzt.

7. Vorrichtung nach einem der Ansprüche 4 bis 6, wobei das Steuerorgan (67, 68) so eingerichtet ist, dass:
- die von der Einspritzdüse eingespritzte Flüssigkeitsmenge eine steigende Funktion der Rotortemperatur ist oder
die von der Einspritzdüse eingespritzte Flüssigkeitsmenge die Summe der von der Erwärmung der eingespritzten Flüssigkeit bis zu seiner Zustandsänderungstemperatur absorbierten Wärmemenge und der von der Zustandsänderung der eingespritzten Flüssigkeit absorbierten Wärmemenge einerseits auf über 90 % der maximalen Wärmemenge bringt, die der Rotor andererseits bei Rotortemperatur über die Oberfläche des Hohlraums an die Flüssigkeit übertragen kann.

8. Vorrichtung nach einem der Ansprüche 1 bis 7, wobei die Rotorbaugruppe (31) eine Welle (33) und einen elektrischen Rotor (39) umfasst, die von einem elektrischen Stator (46) umgeben sind, wobei der Hohlraum (40) mindestens in der Welle (33) ausgebildet ist.

9. Vorrichtung nach Anspruch 8, wobei sich der in der Welle (33) ausgebildete Hohlraum (40) über die gesamte Länge des elektrischen Rotors bis zu mindestens einem Lager (37) erstreckt.

10. Vorrichtung nach einem der Ansprüche 8 oder 9, wobei der elektrische Stator (46) parallel zur Drehachse des Rotors von wenigstens einem Kanal (47) durchlaufen wird, der so eingerichtet ist, dass er wenigstens einen Teil des durch Verdampfung der Kühlflüssigkeit gewonnenen Dampfes in den Hohlraum (40) der Welle (33) transportiert.

11. Vorrichtung nach einem der Ansprüche 8 bis 10, wobei der Luftspalt (55) zwischen dem elektrischen Rotor (39) und dem elektrischen Stator (46) so eingerichtet ist, dass er mindestens einen Teil des durch Verdampfung der Kühlflüssigkeit gewonnenen Dampfes in den Hohlraum (40) der Welle (33) transportiert.

12. Vorrichtung nach einem der Ansprüche 1 bis 11, wobei die Öffnung des in der Welle ausgebildeten Hohlraums (40) teilweise durch eine Verengung (61, 66) verschlossen ist, deren Querschnittsfläche an der Öffnung des Hohlraums kleiner ist als die Querschnittsfläche innerhalb des Hohlraums.

13. Vorrichtung nach einem der Ansprüche 1 bis 12, wobei der Rotor (39) eine im Wesentlichen vertikale Drehachse aufweist und der im Rotor ausgebildete offene Hohlraum (40) nach oben gerichtet ist.

14. Rotierende Maschine mit einem Verdichter und einer Kühlvorrichtung nach einem der Ansprüche 1 bis 13, wobei das Kühlfluid (50) dasselbe Fluid ist wie das vom Verdichter verdichtete Arbeitsfluid.

15. Maschine nach Anspruch 14, wobei ein Kanal (52) in einem Motorgehäuse (45) ausgebildet ist, um mindestens einen Teil des durch Verdampfung der Kühlflüssigkeit gewonnenen Dampfes in den Hohlraum (40) der Welle (33) zu transportieren, und ein Spalt (54) zwischen dem Spiralgehäuse (53) und der letzten Stufe des Verdichters (34b) geschaffen ist, wobei dieser Spalt (54) so eingerichtet ist, dass er diesen Teil des Dampfes transportiert.

## Claims

1. Device for cooling a rotor of a rotating machine, said device comprising:
- in a rotor assembly (31) comprising the rotor and rotating with the rotor, at least one open cavity (40) having a single opening opening out around the axis of rotation of the rotor, and
- facing the single opening in the cavity (40), a cooling-liquid injector (49);
the single opening in the cavity simultaneously forming the inlet for the cooling liquid injected by the injector and the discharge for the cooling fluid leaving the cavity in the form of vapor.

2. Device according to claim 1, which comprises a control unit (67, 68) of the injector configured to control the injection of liquid by the injector as a function of the temperature of the rotor.

3. Device according to claim 2, wherein the control unit (67, 68) of the injector is configured to control the injection of liquid by the injector such that the temperature of the rotor causes the evaporation of the liquid in the form of dry vapor.

4. Device according to one of claims 2 or 3, wherein the control unit (67, 68) of the injector controls the injection of liquid by the injector when the temperature of the rotor is higher than a predefined limit value.

5. Device according to claim 4, wherein the temperature of the rotor is determined by a model utilizing at least one value measured by at least one sensor amongst:
- a temperature sensor for the temperature of a stator of the rotating machine;
- a current sensor for the current supplied by a variator powering an electric motor setting the rotor in rotation;
- a pressure sensor for the internal pressure of the rotating machine;
- a temperature sensor for the temperature of a cooling liquid of the stator of the rotating machine;
- a temperature sensor for the temperature of the rotor; and
- a speed sensor for the rotation speed of the rotor.

6. Device according to claim 5, wherein the model utilizes a quantity of liquid injected by the injector.

7. Device according to one of claims 4 to 6, wherein the control unit (67, 68) is configured such that:
- the quantity of liquid injected by the injector is an increasing function of the temperature of the rotor or
- the quantity of liquid injected by the injector makes the sum of the quantity of heat absorbed by the heating, up to its phase change temperature, of the injected liquid and of the quantity of heat absorbed by the phase change of the injected liquid, on one side, greater than 90% of the maximum amount of heat the rotor can transmit, at the temperature of the rotor, to the liquid through the surface of the cavity, on the other side.

8. Device according to one of claims 1 to 7, wherein the rotor assembly (31) comprises a shaft (33) and an electric rotor (39) surrounded by an electric stator (46), the cavity (40) being formed, at least, in the shaft (33).

9. Device according to claim 8, wherein the cavity (40) formed in the shaft (33) extends over the entire length of the electric rotor up to at least one bearing (37).

10. Device according to one of claims 8 or 9, wherein the electric stator (46) is traversed, parallel to the axis of rotation of the rotor, by at least one channel (47) configured to convey at least some of the vapor obtained by evaporation of the cooling liquid in the cavity (40) of the shaft (33).

11. Device according to one of claims 8 to 10, wherein the air gap (55) between the electric rotor (39) and the electric stator (46) is configured to convey at least some of the vapor obtained by evaporation of the cooling liquid in the cavity (40) of the shaft (33).

12. Device according to one of claims 1 to 11, wherein the opening of the cavity (40) formed in the shaft is partially blocked by a restriction (61, 66) wherein the surface area of the cross-section at the opening of the cavity is smaller than the surface area of the cross-section inside the cavity.

13. Device according to one of claims 1 to 12, wherein the rotor (39) has an axis of rotation substantially vertical and the open cavity (40) formed in the shaft is oriented upwards.

14. Rotating machine comprising a compressor and a cooling device according to one of claims 1 to 13, the cooling fluid (50) being the same fluid as the working fluid compressed by the compressor.

15. Machine according to claim 14, wherein a channel (52) is formed in a motor casing (45) to convey at least some of the vapor obtained by evaporation of the cooling liquid in the cavity (40) of the shaft (33), and a gap (54) is formed between the volute (53) and the last stage of the compressor (34b), this gap (54) being configured to convey this portion of the vapor.
